# EUROPEAN PATENT APPLICATION

(11) **EP 4 635 702 A1**
(43) Date of publication of application: **22.10.2025**
(21) Application number: 25168078.1
(22) Date of filing: 02.04.2025
(51) Int. Cl.: B29B 11/16

(54) **METHOD OF FORMING A PREFORM FOR A COMPOSITE COMPONENT**

(30) Priority: 18.04.2024 US 202418639023
(71) Applicant: General Electric Company, Cincinnati, Ohio 45215 (US)
(72) Inventor: LIN, Wendy, Evendale, 45241 (US); TREVARTHEN, James, Gloucester, GL3 4AQ (GB); SINHA, Shatil, Niskayuna, 12309 (US); MAGAN, Alvaro, Gloucester, GL3 4AQ (GB); WHITE, Jordan, Gloucester, GL3 4AQ (GB)
(74) Representative: Openshaw & Co.

(57) **Abstract**

A method of forming a preform for a composite component. The method includes laying up a plurality of plies (240) to form an initial preform (200, 208) having an initial shape and partially bonding adjacent plies of the plurality of plies (240) to each other to form a bonded preform (202) with the initial shape. The bonded preform (202) includes a high-adherence region (257) and a low-adherence region (259), the bonding between adjacent plies being greater in the high-adherence region (257) than the low-adherence region (259). The method also includes forming the bonded preform (202) from the initial shape to a final shape to generate a shaped preform (204, 206). The final shape has a low-contour region (251) formed from the high-adherence region (257) and a high-contour region (253) formed from the low-adherence region (259).

## Description

### TECHNICAL FIELD

The present disclosure relates to composite components and methods of forming the composite components, particularly, composite components for aircraft engines.

### BACKGROUND

Turbine engines used in aircraft generally include a fan and a turbo-engine section arranged in flow communication with one another. A combustor is arranged in the turbo-engine to generate combustion gases for driving a turbine in the turbo-engine of the turbine engine, and the turbine may be used to drive the fan. A portion of air flowing into the fan flows through the turbo-engine as core air, and another portion of the air flowing into the fan bypasses the core section and flows through the turbine engine as bypass air. The turbo-engine section may include one or more compressors to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numbers generally indicate identical, functionally similar, and/or structurally similar elements.
FIG. 1 is a schematic, cross-sectional view of a turbine engine of for an aircraft.
FIG. 2 is a flow chart showing a method of manufacturing a composite component that may be used in the turbine engine of FIG. 1.
FIG. 3 is a schematic view of a fiber tape that may be used in a lay-up process of the method shown in FIG. 2.
FIGS. 4A and 4B are schematic views of the process to form an initial preform and a bonded preform in the method shown in FIG. 2. FIG. 4A is a top view of the initial preform, and FIG. 4B is a side view of the initial preform.
FIGS. 5A to 5D are schematic views illustrating a forming step of the method shown in FIG. 2. FIG. 5A is a top view of a forming tool with a shaped preform positioned thereon. FIG. 5B illustrates a first step of the forming process, FIG. 5C illustrates a second step of the forming process, and FIG. 5D illustrates a third step of the forming process. FIG. 5D is a cross-sectional view of the forming tool taken along line 5D-5D in FIG. 5A, and FIGS. 5B and 5C are similar cross-sectional views, but at earlier steps in the process.
FIG. 6A is a schematic detail view of the shaped preform showing detail 6A in FIG. 5A, and FIG. 6B is a schematic detail view of the shaped preform showing detail 6B in FIG. 5A.
FIGS. 7A and 7B are schematic views of the process to form another initial preform in the method shown in FIG. 2. FIG. 7A is a top view of the initial preform, and FIG. 7B is a side view of the initial preform.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," "third," and the like, may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The singular forms "a," "an," and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms, such as "about," "approximately," and "substantially" is not to be limited to the precise value specified. In at least some instances, the approximating language may correspond to the precision of an instrument for measuring the value, or the precision of the methods or the machines for constructing or manufacturing the components and/or systems. For example, the approximating language may refer to being within a one, two, four, ten, fifteen, or twenty percent margin in either individual values, range(s) of values, and/or endpoints defining range(s) of values.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC). The composite may be formed of a matrix material and a reinforcing element, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that are formed into a bundle.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength.

One or more layers of adhesive can be used in forming or coupling composite components. Adhesives can include resins including both thermoset resins and thermoplastic resins. Thermoset resins include, for example, epoxies, bismaleimides, urethanes, acrylics, and phenolics. These thermoset adhesive resins can be cured by using elevated temperatures or other hardening techniques. Adhesives may also include thermoplastic resins such as nylons, polyesters, urethanes, polyetherimides, and acrylics. These thermoplastic adhesive resins can melt and flow to create a mechanical lock with the mating surface.

As used herein, PMC refers to a class of materials. The PMC material may be a prepreg. A prepreg is a reinforcement material (e.g., a reinforcing fiber) pre-impregnated with a polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers. The prepregs can be in the form of unidirectional tapes or woven fabrics, which are then stacked on top of one another to create the number of stacked composite plies desired for the part.

Multiple layers of prepreg are stacked to the proper thickness and orientation for the composite component, and then the resin is cured and solidified to render a fiber reinforced composite part. Resins for matrix materials of PMCs can be generally classified as thermosets or thermoplastics. Thermoplastic resins are generally categorized as polymers that can be repeatedly softened and caused to flow when heated and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

Instead of using a prepreg with thermoplastic polymers, another non-limiting example utilizes a woven fabric. Woven fabrics can include, but are not limited to, dry carbon fibers woven together with thermoplastic polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system. The glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include prepreg, braided material, woven material, or any combination thereof. Resin can be pumped into or otherwise provided to the mold or the cavity to impregnate the dry fibers. The combination of the impregnated fibers and the resin is then cured and removed from the mold. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride; SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., from fiber tows) and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods including, but not limited to, melt infiltration, chemical vapor infiltration, polymer impregnation pyrolysis (PIP), or any combination thereof.

The term "metallic" as used herein is indicative of a material that includes metal such as, but not limited to, titanium, iron, aluminum, stainless steel, and nickel alloys. A metallic material or an alloy can be a combination of at least two or more elements or materials, where at least one is a metal.

As noted above, various components of a turbine engine may be manufactured using composites. Such composites may include laminates having a plurality of plies. The process of manufacturing the composite part may include laying up the plurality of plies as part of a process to form a preform. Laying up the plurality of plies may be a time-consuming process, particularly, when complex geometries, such as contoured or curved components are being formed. These complex geometries may thus require hand lay-up instead of automated processes. To facilitate the improved processing, the method discussed herein lays up the plurality of plies on a planar surface of a lay-up tool and selectively bonds portions of the plies to facilitate subsequent forming operations.

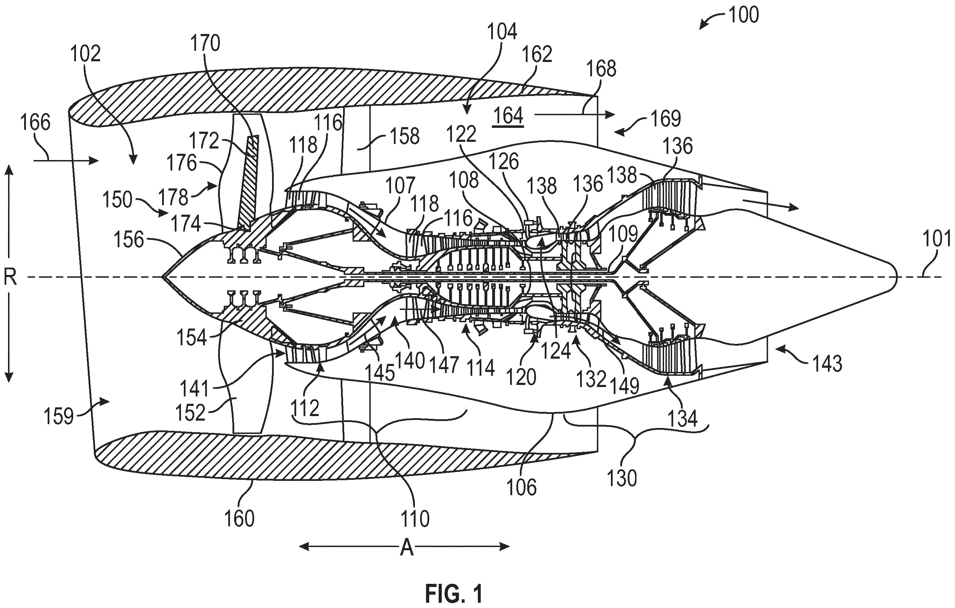

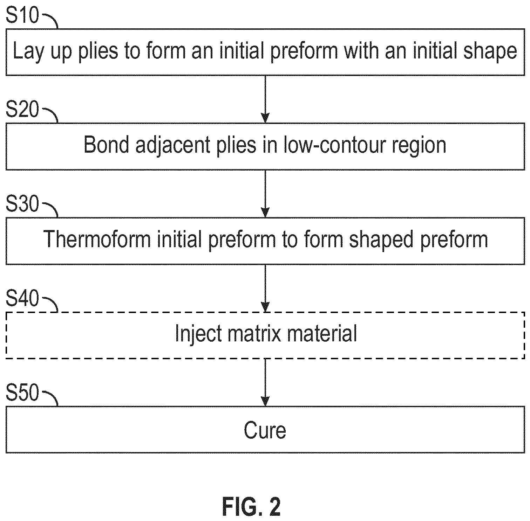

The composite materials discussed herein may be particularly suitable for use in turbine engines for aircraft. FIG. 1 is a schematic, cross-sectional view a turbine engine 100 that may be used on an aircraft. The turbine engine 100 has an axial direction A (extending parallel to a longitudinal centerline axis 101, shown for reference in FIG. 2), a radial direction R, and a circumferential direction C. The circumferential direction C extends in a direction rotating about the longitudinal centerline axis 101 (the axial direction A). In the embodiment depicted in FIG. 1, the turbine engine 100 is a high bypass turbofan engine, including a fan section 102 and a turbo-engine 104 disposed downstream from the fan section 102.

The turbo-engine 104 depicted in FIG. 1 includes in serial flow relationship, a compressor section 110, a combustion section 120, and a turbine section 130. The turbo-engine 104 is substantially enclosed within an outer casing 106 that is substantially tubular and defines a core inlet 141. In this embodiment, the core inlet 141 is annular. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbo-engine 104 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbo-engine 104 includes a high-pressure (HP) shaft 108 or a HP spool, and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotate relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 may be a part of a compressor rotor that includes a disk and the plurality of compressor blades 116 extend radially from the disk. Other configurations of the compressor rotor may be used, including, for example, blisks where the disk and the compressor blades 116 are integrally formed with each other to be a single piece. The corresponding static compressor vanes 118 are positioned upstream of and adjacent to the rotating compressor blades 116. The compressor vanes 118 for a stage of the compressor can be mounted to a core casing 107 in a circumferential arrangement. The core casing may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a plurality of turbine blades 136 rotate relative to a corresponding plurality of static turbine vanes 138 (also called a nozzle) to extract energy from combustion gases 149 passing through the stage. The turbine blades 136 may be a part of a turbine rotor. Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 and, more specifically, the turbo-engine 104 further includes one or more drive shafts. As noted above, the turbo-engine 104 includes the high-pressure (HP) shaft 108 drivingly connecting the HP turbine 132 to the HP compressor 114, and the low-pressure (LP) shaft 109 drivingly connecting the LP turbine 134 to the LP compressor 112. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of thermal energy or kinetic energy from the combustion gases 149 is extracted via the one or more stages of the turbine blades 136 and turbine vanes 138 of the HP turbine 132. This causes the HP shaft 108 to rotate, thereby supporting operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the thermal energy or the kinetic energy is extracted from the combustion gases 149 via one or more stages of the turbine blades 136 and turbine vanes 138 of the LP turbine 134. This causes the LP shaft 109 to rotate, thereby supporting operation of the LP compressor 112 (self-sustaining cycle), and rotating the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the compressor rotors and the turbine rotors.

The fan section 102 shown in FIG. 1 includes a fan 150 having a plurality of fan blades 152 coupled to a disk 154. The fan blades 152 and the disk 154 are rotatable, together, about the longitudinal centerline (axis) 101 by the LP shaft 109. The LP compressor 112 may also be directly driven by the LP shaft 109, as depicted in FIG. 2. The disk 154 is covered by a fan hub 156 aerodynamically contoured to promote an airflow through the plurality of fan blades 152. Further, a nacelle 160 circumferentially surrounds the fan 150, and in the depicted embodiment, at least a portion of the turbo-engine 104. The nacelle 160 may also be referred to as an annular fan casing or an outer nacelle. The nacelle 160 is supported relative to the turbo-engine 104 and, more specifically, the outer casing 106 by a plurality of outlet guide vanes 158 that are circumferentially spaced about the nacelle 160 and the turbo-engine 104. A downstream section 162 of the nacelle 160 extends over an outer portion of the turbo-engine 104 and, more specifically, the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as a (an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

The turbine engine 100 shown in FIG. 1 and discussed herein (turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc. Further, still, in alternative embodiments, aspects of the present disclosure may be incorporated into, or otherwise utilized with, any other type of engine, such as reciprocating engines.

The turbine engine 100 discussed herein is suitable for use on aircraft. Suitable aircraft include, for example, airplanes, helicopters, and unmanned aerial vehicles (UAV). In other embodiments, the turbine engine may be any other turbine engines, such as an industrial turbine engine incorporated into a power generation system, a nautical turbine engine on a ship or other vessel.

Various components of the turbine engine 100 may be formed from composite materials. These components are referred to herein as composite components. Some of these composite components may have a change in contour and, more specifically, a curvature. For example, each of the fan blades 152 may include a spar 170 that provides structural support for the fan blade 152. The fan blades 152 and the spar 170 are examples of composite components of the turbine engine 100, and other examples of composite components of the turbine engine 100 include compressor blades 116 and compressor vanes 118. These composite components may be made from PMC materials. Other composites, such as CMC materials may be used for other components, including, for example, turbine blades 136, turbine vanes 138, and components of the combustion section 120 such as combustor liners used to form the combustion chamber 124.

The spar 170 includes a main body 172 and a root 174. The root engages with the disk 154 and connects the fan blade 152 and, more specifically, the spar 170 to the disk 154. A skin 176 forms the exterior surface of a blade portion 178 of the fan blade 152. The blade portion 178 has an aerodynamic shape and may be relatively flat or have a low curvature, and, thus, the main body 172 of the spar 170 may also be flat or have a low curvature. The root 174, however, may have a high degree of curvature (or contour).

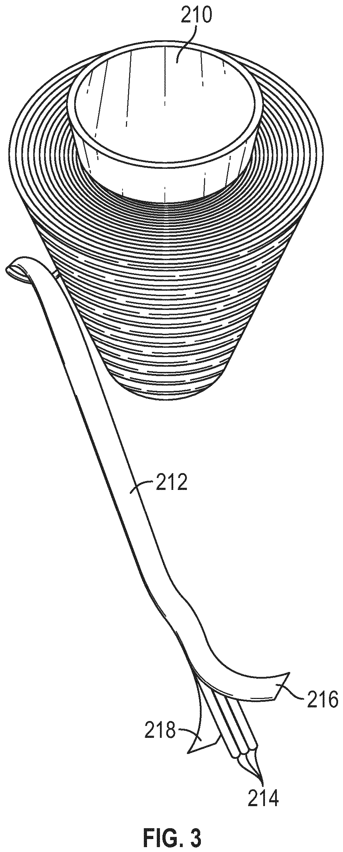

FIG. 2 is a flow chart illustrating a method of manufacturing a composite component. The following method will discuss the spar 170 (FIG. 1) as the composite component, but the process is applicable to other composite components. Various steps of the method shown in FIG. 2 will be discussed further below with reference to FIGS. 3 to 7B.

In step S10, the method includes laying up a plurality of plies to form an initial preform with an initial shape. Each of the plies includes a plurality of fiber tows. The plurality of plies may be laid up by hand (i.e., hand lay-up) or using an automated process including an automated lay-up system. The automated lay-up system and corresponding automated process may be, for example, an Automated Tape Laying (ATL) system, an Automated Fiber Placement (AFP) system, a Thermoplastic Fiber/Tape Placement (TTP) system, Pick-and-Place system and the like. The lay-up process is preferably performed on a lay-up tool having a flat or a low-contour lay-up surface. The final preform (or shaped preform), however, will have regions that have a contour or a curvature that is greater than that of other regions. These regions will be referred to herein as high-contour regions and low-contour regions. In some embodiments, the low-contour regions may be flat, and additional details of these regions will be discussed further below.

The method includes, in step S20, at least partially bonding adjacent plies in the regions of the initial preform that will become the low-contour regions of the shaped preform. This bonding is intended to hold the initial preform and, more specifically, the plies in the desired orientations for subsequent processing. As used herein, the terms "bonding," "bonded," and the like, thus include not only permanent bonding, but also temporary bonding. Permanent bonding would include bonding processes for the as finished product, such as the processing of thermoset plastics. Temporary bonding would include tacking, such as tacking where the plies could be separated, if needed but do not readily separate from normal handing operations. The plies may include bonding agents that may be processed, such as by heating, to bond the adjacent plies to each other. When the bonding is tacking, the bonding agent may be a tackifier. Although each of the plies may include the bonding agent, at least one ply of the adjacent plies includes the bonding agent. The regions of the initial preform that will become the high-contour regions of the shaped preform, however, are not bonded to each other or the degree of bonding in those regions is less than in the regions that will become the low-contour regions. The initial preform, after being at least partially bonded, thus forms a bonded preform including high-adherence regions and low-adherence regions. Step S20 may occur concurrently with step S10. As will be discussed further below, the bonding agent may be heat activated, pressure activated, and or activated by ultraviolet light. Step S20 may thus include activating the bonding agent by heating the plurality of plies, applying pressure to the plurality of plies, and/or irradiating the plurality of plies with ultraviolet light.

In step S30, the method includes forming a partially bonded preform from the initial shape to a final shape to generate a shaped preform. The forming method discussed herein is vacuum thermoforming, but other forming processes may be used. The bonded preform may be placed on a forming tool and the partially bonded preform is shaped to the forming tool. The low-adherence regions are positioned to correspond to high-contour regions of the final shape. With limited or low bonding between adjacent plies in the low-adherence regions, the plies can slide or shear past each other, allowing the bonded preform to take on the final shape without constraint between the plies. Optionally, additional machining processes and manufacturing processes, such as adding inserts, may be carried out on the shaped preform to form the final preform.

After the preform is complete (i.e., the final preform), a matrix material may be injected into the preform in step S40 to generate an infiltrated (or an impregnated) preform. When the composite component is a polymer matrix composite, polymers and/or resin may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes may be used in this step depending upon the matrix material. As noted above, the plies may be formed using prepreg fiber tows to introduce a matrix material, and, in such an embodiment, this step (step S40) may be omitted.

The method continues with curing the infiltrated preform in step S50 to bond the composite material and, more specifically, the matrix together forming the composite component. The curing process depends upon the material and may include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or contour of the composite component. For example, when the composite component is a fan blade 152 (FIG. 1), the edges of the fan blade 152 may be machined to define the final shape or the contour of the airfoil (e.g., blade portion 178) and the root 174. Additionally, the composite component can be coated with one or more suitable coatings, such as, e.g., an environmental barrier coating (EBC) or a polyurethane surface coating.

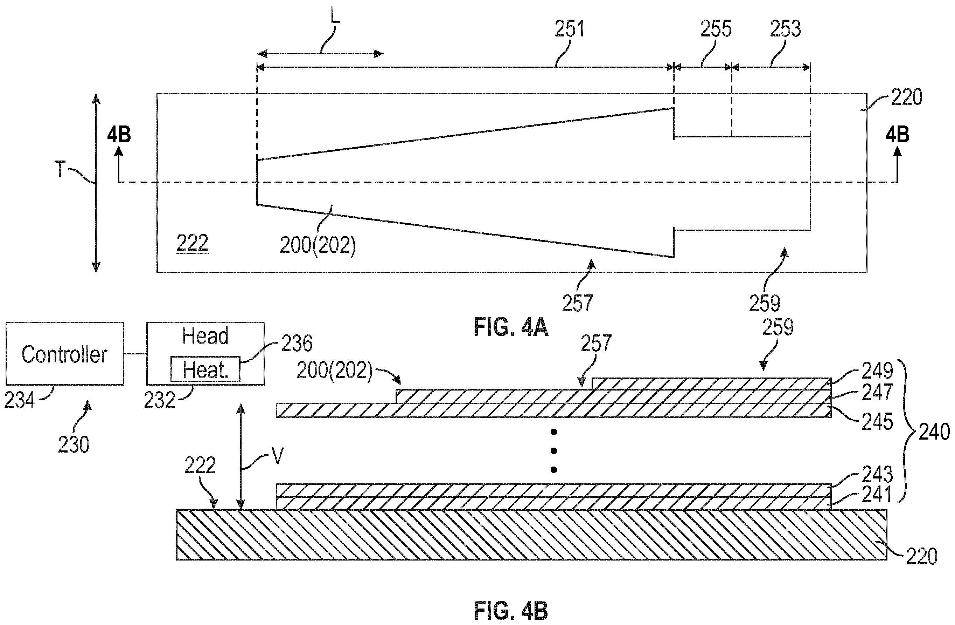

FIG. 3 illustrates a reel 210 holding a fiber tape 212 that may be used in the lay-up process of step S10 (FIG. 2). As noted above, the plurality of plies may include reinforcing fibers, and, in these embodiments, the lay-up process may include placing or laying up fiber tows 214 to form a plurality of plies. Hand lay-up may be used, but the method used herein may be particularly useful when an automated lay-up system is used. Such processes may use a robotic dispenser head 232 (FIG. 4B) to dispense and to place the fiber tows 214. The fiber tows 214 may be wound on the reel 210 and, as discussed further below, placed by the dispenser head 232 in a pattern to form each ply. In the depicted embodiment, the plurality of fiber tows 214 are placed together as part of laying the fiber tape 212. The fiber tows 214 are sandwiched between an upper veil 216 and a lower veil 218 in this embodiment. Other automated processes, such as AFP systems, may lay fiber tows.

As noted above, a bonding agent may be used in step S20 to bond adjacent plies to each other. Although each ply of the plurality of plies may include the bonding agent, at least one ply of the adjacent plies includes the bonding agent. In some embodiments, the bonding agent may be integral with the fiber tape 212 and applied with the fiber tape 212 by the dispenser head 232. For example, the bonding agent may be included as part of the upper veil 216, the lower veil 218, or both. Additionally or alternatively, the bonding agent may be present in the fiber tape 212 in other forms, such as a powder or a filament, for example. Suitable bonding agents may include, for example, tackifiers, binders, or resin, and such bonding agents may be activated upon the application of heat, pressure, and/or multivallate light to the bonding agent. For example, thermoplastics that are chemically compatible with the composite matrix material may be used. For an epoxy matrix, example thermoplastics include polyamide, polyurethane, polyetherimide, or copolymers or blends including these materials. Other bonding or tackifier agents may be used including those that bind under the application of other processes other than heat. The tackifier agent may include microencapsulated catalysts which may be activated upon application of pressure.

FIGS. 4A and 4B illustrate forming an initial preform 200 in step S10 of FIG. 2 and a bonded preform 202 in step S20 of FIG. 2. FIG. 4A is a top view of the initial preform 200, and FIG. 4B is a side view of the initial preform 200. The initial preform 200 may be formed using a lay-up tool 220. The lay-up tool 220 includes a substantially planar surface 222, and an automated lay-up system 230 is used to lay up the initial preform 200 and, more specifically, a plurality of plies 240 on the planar surface 222. Alternatively, instead of a planar surface, the lay-up surface of the lay-up tool 220 may have a low-contour shapes. The automated lay-up system 230 includes the dispenser head 232 and a controller 234. The dispenser head 232 is movable along one or more of a lateral direction L, a transverse direction T, and a vertical direction V. The vertical direction V, the lateral direction L, and the transverse direction T are mutually perpendicular and form an orthogonal direction system. The controller 234 is communicatively coupled with the dispenser head 232 to control the dispenser head 232 using one or more motors, actuators, or other movement mechanisms. The dispenser head 232 is operatively configured to dispense the fiber tape 212 (FIG. 3) in a controlled pattern to form the initial preform 200. For instance, a lay-up program can be uploaded or programmed into the controller 234 such that the dispenser head 232 dispenses the fiber tape 212 in accordance with the program. The controller 234 can be a computer or other suitable computing device having a processor, a memory, and one or more interface devices for allowing user manipulation of the automated lay-up system 230.

More specifically, the dispenser head 232 deposits the fiber tape 212 on the planar surface 222 of the lay-up tool 220 to form a first ply 241 of the plurality of plies 240. This example uses the fiber tape 212 including the fiber tows 214 (FIG. 3) to form the plurality of plies 240, but the processes discussed herein apply to any of the plies discussed above. The dispenser head 232 then deposits the fiber tape 212 on top of the first ply 241 to form a second ply 243. This process is then repeated until all the plies of the plurality of plies 240 are formed. Any suitable number of plies may be formed for the desired thickness of the composite component. Additional plies are illustrated in FIG. 4B, and, for convenience herein, these additional plies are referred to as a third ply 245, a fourth ply 247, and a fifth ply 249. In laying up the plurality of plies 240, the plies are located adjacent to each other. For example, the first ply 241 is adjacent to the second ply 243, and the fourth ply 247 is adjacent to each of the third ply 245 and the fifth ply 249.

With the initial preform 200 formed on the lay-up tool 220 and, more specifically, the planar surface 222, the plies are also planar and parallel to each other and the initial preform 200 is flat. To the extent that curvature or other contour is present in the initial preform 200 at this stage, that curvature or contour is formed by selectively positioning the layers, such as at different lengths to form different thicknesses, as depicted in FIG. 4B, for example. The initial preform 200 includes a portion 251 that will become the main body 172 of the spar 170 (composite component) (FIG. 1). As noted above, the main body 172 is flat or has a minimal contour, and, thus, the portion 251 is referred to herein as a low-contour region 251. The initial preform 200 also includes a portion 253 that will become the root 174 of the spar 170 (i.e., the composite component) (FIG. 1), and the root 174 is semi-circular in this embodiment, having a high contour or a curvature, and, thus, the portion 253 is referred to herein as a high-contour region 253. The initial preform 200 is continuous between the low-contour region 251 and the high-contour region 253, and a transition region 255 is formed between the low-contour region 251 and the high-contour region 253.

In step S20 (FIG. 2), adjacent plies (e.g., the first ply 241 and the second ply 243) of the plurality of plies 240 are bonded to each other. Bonding adjacent plies to each other may help hold the fiber tows 214 (FIG. 3) of the initial preform 200 in the desired position and shape for subsequent processing. Adjacent plies may be bonded to each other by activating the bonding agent using a suitable activation process for the bonding agent. As discussed above, the bonding agent may be integral with the fiber tape 212 (FIG. 3) and applied with the fiber tape 212 by the dispenser head 232. Alternatively, the bonding agent may be applied separately from the fiber tape 212 and between adjacent plies. When the bonding agent forms bonds by heating (i.e., the bonding agent is heat activated), the dispenser head 232 may include a heater 236 to selectively apply the heat as discussed herein. Bonding the initial preform 200 forms the bonded preform 202 after the bonding step S20 (FIG. 2) is complete. Optionally, this step may be concurrent with step S10 with the higher heat and/or the higher pressure applied in the low-contour areas as the plies are being laid down.

In embodiments discussed herein, adjacent plies are not, however, bonded to each other equally over the entire bonded preform 202. Instead, the bonded preform 202 includes a high-adherence region 257 and a low-adherence region 259. The bonding between adjacent plies is greater in the high-adherence region 257 than in the low-adherence region 259. More specifically, the adjacent plies in the low-contour region 251 of the initial preform 200 are bonded to each other to form the high-adherence region 257. In the high-contour region 253 and the transition region 255, however, adjacent plies preferably slide relative to each other during the forming step S30 (FIG. 2), and, thus, the degree of bonding between adjacent plies in the low-adherence region 259 is preferably low enough to allow the plies to slide relative to each other and, in some embodiments, adjacent plies in the low-adherence region 259 are free from bonding to each other. When the bonding agent is heat activated, the low-adherence region 259 may be formed by heating adjacent plies of the low-adherence region 259 to a lower temperature, for less time, or both, than the high-adherence region 257. When the bonding agent is pressure activated, the low-adherence region 259 may be formed by applying pressure to adjacent plies of the low-adherence region 259 to a lower pressure, for less time, or both, than the high-adherence region 257. When the bonding agent is activated by ultraviolet light, the low-adherence region 259 may be formed by irradiating adjacent plies of the low-adherence region 259 for less time than the high-adherence region 257. When adjacent plies in the low-adherence region 259 are free from bonding to each other, the heat for bonding, the pressure for bonding, the ultraviolet light for bonding, or combination thereof may be selectively applied only to the high-adherence region 257 and not to the low-adherence region 259.

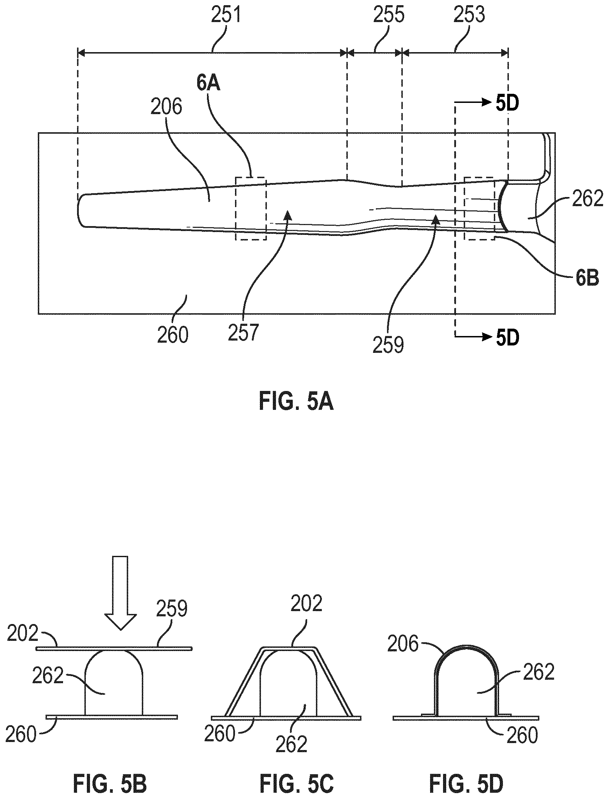

FIGS. 5A to 5D illustrate the forming step S30 of FIG. 2. The process illustrated in FIGS. 5A to 5D is a vacuum thermoforming process, but, as noted above, other forming processes may be used. The thermoforming process utilizes a forming tool 260 to shape the bonded preform 202 and to form a shaped preform 206. FIG. 5A is a top view of the forming tool 260 with the shaped preform 206 positioned thereon (after the third step illustrated in 5D). The forming tool 260 may include a contoured molding region 262 that is used to impart the contour or curvature to the high-contour region 253, the transition region 255, or both.

FIG. 5B illustrates a first step of the forming process, FIG. 5C illustrates a second step of the forming process, and FIG. 5D illustrates a third step of the forming process. FIG. 5D is a cross-sectional view taken along line 5D-5D in FIG. 5A, and FIGS. 5B and 5C are similar cross-sectional views, but at earlier steps in the process. In FIG. 5B, the bonded preform 202 is placed on the forming tool 260. The high-adherence region 257 (FIG. 5A) is placed on a portion of the forming tool 260 that does not impart curvature (or imparts only limited curvature), and the low-adherence region 259 is placed on the contoured molding region 262. Then, in FIG. 5C, the bonded preform 202 is shaped to the forming tool 260 and, more specifically, the contoured molding region 262. A force is applied to the bonded preform 202. A vacuum may be used to draw the bonded preform 202 to the forming tool 260 or pressure may be exerted on a top side of the bonded preform 202 to conform the bonded preform 202 to the shape of the forming tool 260, forming the shaped preform 206 as illustrated in FIG. 5D.

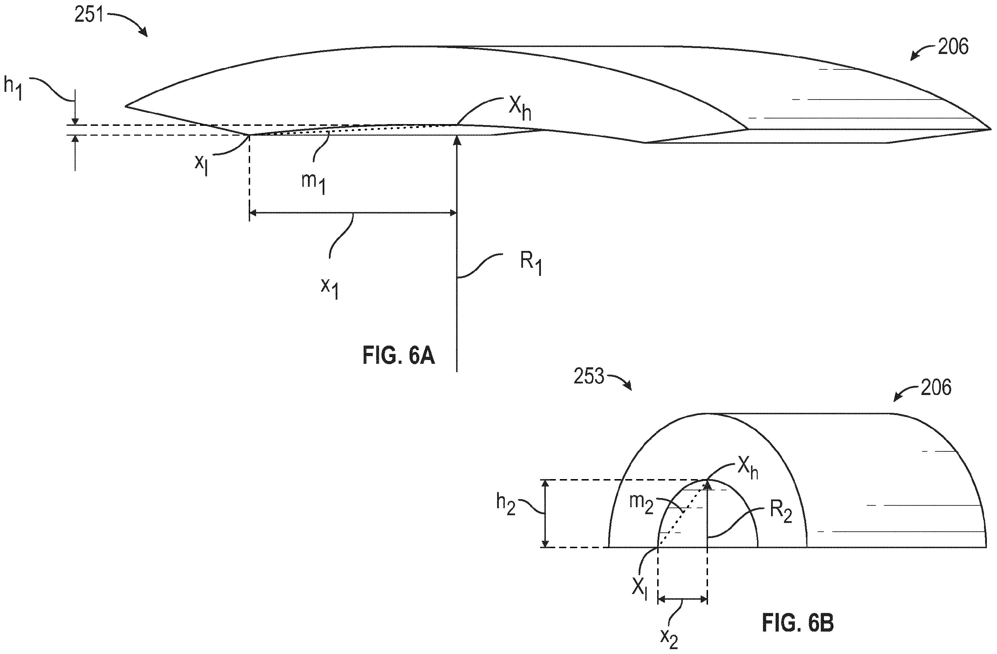

FIGS. 6A and 6B illustrate the low-contour region 251 and the high-contour region 253, respectively. FIG. 6A is a schematic detail view of the shaped preform 206 showing detail 6A in FIG. 5A, and FIG. 6B is a schematic detail view of the shaped preform 206 showing detail 6B in FIG. 5A. In the depicted embodiment, the low-contour region 251 and the high-contour region 253 are each circular or annular in cross section, having a radius of curvature. The radius of curvature R₁ of the low-contour region 251 is greater than the radius of curvature R₂ of the high-contour region 253. For the embodiments discussed herein, low curvature may be radii of curvature R₁ for the low-contour region 251 that are from infinite (flat) to radii of twenty centimeters (20 cm), and, thus, high curvatures may be radii of curvature R₂ for the high-contour region 253 that are less than twenty centimeters (20 cm). The methods discussed herein are suitable for radii of curvature R₂ down to one millimeter (1 mm), and thus the high-contour region 253 may have a radius of curvature R₂ less than twenty centimeters (20 cm) and greater than one millimeter (1 mm).

The contour may also be expressed in terms of a rate of change or slope m. The slope m may preferably be used to characterize the degree of contour when the shaped preform has an irregular curvature or a non-curvilinear shape (e.g., facets). A surface of the shaped preform 206 may change in height (indicated as h₁ for the low-contour region 251 and h₂ for the high-contour region 253) over a distance (run) (indicated as x₁ for the low-contour region 251 and x₂ for the high-contour region 253) from the lowest point of the shape change x₁ to the highest point xₕ. The slope m₁ of the low-contour region 251 shown in FIG. 6A thus may be given by the height over run (h₁/x₁), and the slope m₂ of the high-contour region 253 shown in FIG. 6B thus also may be given by the height over run (h₂/x₂). These slopes are given for the interior surface in the depicted embodiment. The slope m₁ of the low-contour region 251 is less than the radius of curvature slope m₂ of the high-contour region 253. For the embodiments discussed herein, low contour may be slopes m₁ for the low-contour region 251 that are from zero (flat) to slopes of a half (0.5), and, thus, high contour may be slopes m₂ for the high-contour region 253 that are greater than a half (0.5). The methods discussed herein are suitable for use on slopes m₂ up to ten (10), and thus the high-contour region 253 may have slopes m₂ from a half (0.5) to ten (10).

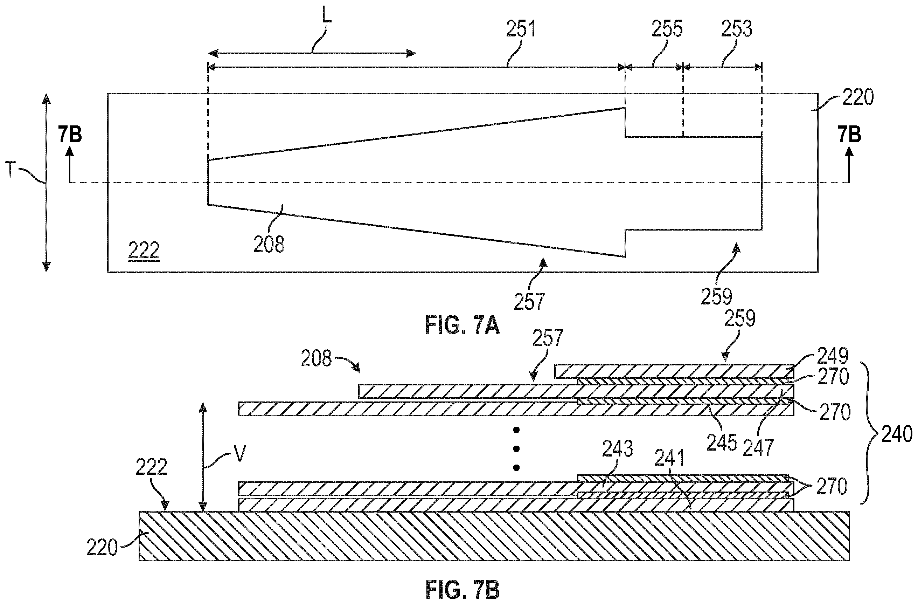

FIGS. 7A and 7B illustrate an alternate approach to forming an initial preform 208 in step S10 of FIG. 2. FIG. 7A is a top view of the initial preform 208, and FIG. 7B is a side view of the initial preform 208. The initial preform 208 of this embodiment is similar to the initial preform 200 discussed above, and, likewise, steps and tools used to form the initial preform 200 are also similar to those used to form the initial preform 208 of this embodiment. The same reference numerals are used for features of this embodiment that are the same as or similar to those discussed above, and the discussion of those steps and features applies here. In this embodiment, a separator 270 may be positioned between adjacent plies of the plurality of plies 240 in the low-adherence region 259. The separator 270 may be used to prevent bonding between adjacent plies. The separator 270 may be a sheet or a film of material that does not bond to the bonding agent used when the bonding process (such as heating) is applied in step S20 (FIG. 2). Suitable materials for the separator 270 include, for example, polyester, polytetrafluoroethylene (PTFE), such as Teflon^{®} produced by The Chemours Company of Wilmington, Delaware, and polyimide, such as Kapton^{®} produced by DuPont of Wilmington, Delaware.

The low-adherence regions of the bonding preform 202 discussed herein allow adjacent plies to slide relative to each other during forming processes. This enables the initial preform 200, 208 to be laid up on a flat or otherwise planar surface 222, facilitating faster lay-up times and processes such as the use of an automated layup system 230. Further aspects of the present disclosure are provided by the subject matter of the following clauses.

A method of forming a preform for a composite component. The method includes laying up a plurality of plies to form an initial preform having an initial shape and partially bonding adjacent plies of the plurality of plies to each other to form a bonded preform having the initial shape. The bonded preform includes a high-adherence region and a low-adherence region, the bonding between adjacent plies being greater in the high-adherence region than in the low-adherence region. The method also includes forming the bonded preform from the initial shape to a final shape to generate a shaped preform. The final shape has a low-contour region formed from the high-adherence region and a high-contour region formed from the low-adherence region.

The method of the preceding clause, wherein each ply of the plurality of plies includes a plurality of fiber tows.

The method of any preceding clause, wherein the plurality of plies is laid up on a lay-up tool, the lay-up tool having a planar surface on which the plurality of plies is laid up.

The method of any preceding clause, wherein the initial shape has a contour and the high-contour region has a contour, the contour of the initial shape being less than the contour of the high-contour region.

The method of the preceding clause, wherein the initial shape is flat.

The method of any preceding clause, wherein the plurality of plies is laid up using an automated lay-up system.

The method of any preceding clause, wherein the plurality of plies is laid up by hand.

The method of the preceding clause, wherein the automated lay-up system lays up the plurality of plies using a fiber tape.

The method of any preceding clause, wherein the bonded preform is formed using a forming tool to shape the bonded preform from the initial shape to a final shape, the forming tool including a contoured molding region to impart the contour to the high-contour region.

The method of the preceding clause, wherein the bonded preform is formed using a thermoforming process.

The method of the preceding clause, wherein the thermoforming process is a resin transfer molding process.

The method of any preceding clause, wherein the low-contour region has a radius of curvature and the high-contour region has a radius of curvature, the radius of curvature for the high-contour region being less than the radius of curvature for the low-contour region.

The method of any preceding clause, wherein the low-contour region has a radius of curvature of 20 cm or greater.

The method of any preceding clause, wherein the high-contour region has a radius of curvature less than 20 cm.

The method of any preceding clause, wherein the high-contour region has a radius of curvature less than 20 cm and greater than 1 mm.

The method of any preceding clause, wherein the low-contour region has a slope and the high-contour region has a slope, the slope for the high-contour region being greater than the slope for the low-contour region.

The method of any preceding clause, wherein the low-contour region has a slope from 0 to 0.5.

The method of any preceding clause, wherein the high-contour region has a slope greater than 0.5.

The method of any preceding clause, wherein the high-contour region has a slope greater than 0.5 and 10 or less.

The method of any preceding clause, wherein at least one ply of the adjacent plies includes a bonding agent, and bonding adjacent plies of the plurality of plies to each other includes activating the bonding agent.

The method of the preceding clause, wherein the bonding agent is at least one of tackifiers, binders, or a resin.

The method of any preceding clause, wherein, in bonding adjacent plies of the plurality of plies to each other, the bonding agent is at least one of a veil, a powder, or a filament within or between the at least one ply.

The method of any preceding clause, wherein the bonding agent is heat activated and activating the bonding agent includes heating the plurality of plies.

The method of the preceding clause, wherein the low-adherence region is formed by heating adjacent plies of the low-adherence region to a lower temperature than that of the high-adherence region.

The method of any preceding clause, wherein the heat to bond adjacent plies is selectively applied only to the high-adherence region.

The method of any preceding clause, wherein the bonding agent is pressure activated and activating the bonding agent includes applying pressure to the plurality of plies.

The method of the preceding clause, wherein the low-adherence region is formed by applying pressure to adjacent plies of the low-adherence region to a lower pressure than that of the high-adherence region.

The method of any preceding clause, wherein the pressure to bond adjacent plies is selectively applied only to the high-adherence region.

The method of any preceding clause, wherein the bonding agent is activated by ultraviolet light and activating the bonding agent includes irradiating the plurality of plies with ultraviolet light.

The method of the preceding clause, wherein the low-adherence region is formed by irradiating adjacent plies of the low-adherence region for less time than that of the high-adherence region.

The method of any preceding clause, wherein only to the high-adherence region is irradiated with ultraviolet light.

The method of any preceding clause, wherein adjacent plies in the low-adherence region are free from bonding to each other.

The method of the preceding clause, further comprising positioning a separator between adjacent plies of the plurality of plies in the low-adherence region to prevent bonding between adjacent plies.

The method of the preceding clause, wherein the separator is a sheet of material.

The method of any preceding clause, wherein the separator is formed from at least one of polyester, polytetrafluoroethylene, or polyimide.

A method of forming a composite component including preparing a preform using the method of any preceding clause.

A method of forming a composite component. The method includes preparing a preform using the method of any preceding clause, wherein the plies of the plurality of plies are prepreg plies, and curing the preform to generate the composite component.

A method of forming a composite component. The method includes preparing a preform using the method of any preceding clause, injecting a matrix material into the preform to generate an infiltrated preform, and curing the infiltrated preform to generate the composite component.

The method of forming the composite component of any preceding clause, wherein the composite component is for a turbine engine.

The method of forming the composite component of any preceding clause, wherein the composite component is an airfoil.

The method of forming the composite component of the preceding clause, wherein the composite component is for a turbine engine, the turbine engine including a fan having a plurality of fan blades, the airfoil being one of the fan blades.

The method of forming the composite component of any preceding clause, wherein the composite component is for a turbine engine, the turbine engine including a fan having a plurality of fan blades and a plurality of outlet guide vanes positioned downstream of the fan relative to an airflow, the airfoil one of the outlet guide vanes of the plurality of outlet guide vanes.

The method of forming the composite component of any preceding clause, wherein the composite component is for a turbine engine, the turbine engine including a compressor the airfoil being a component of the compressor.

The method of forming the composite component of the preceding clause, wherein the compressor includes a plurality of compressor blades, the airfoil being a compressor blade of the plurality of compressor blades.

The method of forming the composite component of the preceding clause, wherein the compressor includes a plurality of static compressor vanes, the airfoil being a static compressor vane of the plurality of static compressor vanes.

Although the foregoing description is directed to the preferred embodiments, other variations and modifications will be apparent to those skilled in the art, and may be made without departing from the disclosure. Moreover, features described in connection with one embodiment may be used in conjunction with other embodiments, even if not explicitly stated above.

## Claims

1. A method of forming a preform for a composite component, the method comprising:
laying up a plurality of plies (240) to form an initial preform (200, 208) having an initial shape
partially bonding adjacent plies of the plurality of plies (240) to each other to form a bonded preform (202) having the initial shape, the bonded preform (202) including a high-adherence region (257) and a low-adherence region (259), the bonding between adjacent plies being greater in the high-adherence region (257) than in the low-adherence region (259); and
forming the bonded preform (202) from the initial shape to a final shape to generate a shaped preform (204, 206), the final shape having a low-contour region (251) formed from the high-adherence region (257) and a high-contour region (253) formed from the low-adherence region (259).

2. The method of claim 1, wherein each ply of the plurality of plies (240) includes a plurality of fiber tows (214).

3. The method of claim 1 or 2, wherein the plurality of plies (240) is laid up on a lay-up tool (220), the lay-up tool (220) having a planar surface (222) on which the plurality of plies (240) is laid up, and/or
wherein plurality of plies (240) is laid up using an automated lay-up system (230).

4. The method of any one of claims 1 to 3, wherein the initial shape has a contour and the high-contour region (253) has a contour, the contour of the initial shape being less than the contour of the high-contour region (253).

5. The method of any one of claims 1 to 5, wherein the bonded preform (202) is formed using a forming tool (260) to shape the bonded preform (202) from the initial shape to a final shape, the forming tool (260) including a contoured molding region (262) to impart the contour to the high-contour region (253).

6. The method of claim 5, wherein the bonded preform (202) is formed using a thermoforming process.

7. The method of any one of claims 1 to 6, wherein at least one ply of the adjacent plies includes a bonding agent, and bonding adjacent plies of the plurality of plies (240) to each other includes activating the bonding agent.

8. The method of claim 7, wherein the bonding agent is at least one of tackifiers, binders, or a resin, and/or
wherein, in bonding adjacent plies of the plurality of plies (240) to each other, the bonding agent is at least one of a veil, a powder, or a filament within or between the at least one ply.

9. The method of claim 7 wherein the bonding agent is heat activated, and activating the bonding agent includes heating the plurality of plies (240).

10. The method of claim 9, wherein the low-adherence region (259) is formed by heating adjacent plies of the low-adherence region (259) to a lower temperature than that of the high-adherence region (257), or
wherein the heat to bond adjacent plies is selectively applied only to the high-adherence region (257).

11. The method of any one of claims 1 to 10, wherein adjacent plies in the low-adherence region (259) are free from bonding to each other.

12. The method of claim 11, further comprising positioning a separator (270) between adjacent plies of the plurality of plies (240) in the low-adherence region (259) to prevent bonding between adjacent plies.

13. The method of claim 12, wherein the separator (270) is a sheet of material, and/or
wherein the separator (270) is formed from at least one of polyester, polytetrafluoroethylene, or polyimide.

14. A method of forming a composite component, the method comprising:
preparing a preform using the method of any one of claims 1 to 13, wherein the plies of the plurality of plies (240) are prepreg plies; and
curing the preform to generate the composite component.

15. A method of forming a composite component, the method comprising:
preparing a preform using the method of any one of claims 1 to 13;
injecting a matrix material into the preform to generate an infiltrated preform; and
curing the infiltrated preform to generate the composite component.
